# EUROPÄISCHE PATENTANMELDUNG

(11) **EP 2 759 454 A2**
(43) Veröffentlichungstag der Anmeldung: **30.07.2014**
(21) Anmeldenummer: 14152283.9
(22) Anmeldetag: 23.01.2014
(51) Int. Cl.: B61D 3/18

(54) **Schienenfahrzeug mit Ladeeinrichtung**

(30) Priorität: 28.01.2013 DE 102013201271
(71) Anmelder: Siemens Aktiengesellschaft, 80333 München (DE)
(72) Erfinder: Schaefer-Enkeler, Andreas, 91341 Röttenbach (DE); Zink, Klaus, 97725 Elfershausen (DE)

(57) **Zusammenfassung**

Die Erfindung betrifft ein Schienenfahrzeug mit zumindest einer Abstelleinrichtung (18.1 - 18.5; 46.1 - 46.4), die zum Abstellen eines Straßenfahrzeugs (20; 44) während eines Transports vorgesehen ist.

Um das Schienenfahrzeug an den sich verbreitenden Einsatz von elektrisch angetriebenen Straßenfahrzeugen anzupassen, wird vorgeschlagen, dass es eine Abstelleinrichtung (18.1 - 18.5; 46.1 - 46.4), die zum Abstellen eines Straßenfahrzeugs (20; 44) während eines Transports vorgesehen ist, welches eine Antriebseinheit und eine Speichereinheit (28; 52) zum Speichern einer elektrischen Energie zur Versorgung der Antriebseinheit aufweist, und zumindest eine Ladeeinrichtung (30; 48) zum Beladen der Speichereinheit (28; 52) während des Transports aufweist.

## Beschreibung

Die Erfindung betrifft ein Schienenfahrzeug mit zumindest einer Abstelleinrichtung, die zum Abstellen eines Straßenfahrzeugs während eines Transports vorgesehen ist.

Es ist bereits bekannt, in einem Schienenfahrzeug eine Abstellmöglichkeit zum Abstellen eines Straßenfahrzeugs während des Transports vorzusehen. Insbesondere sind in Schienenfahrzeugen, die für den Transport von Passagieren ausgestattet sind, sogenannte Fahrradabteile vorgesehen, in welchen Fahrräder abgestellt werden können.

Außerdem sind Autoreisezüge bekannt, die zur Aufnahme und zum Transport von Kraftfahrzeugen für den Fernverkehr vorgesehen sind.

Der Erfindung liegt die Aufgabe zugrunde, das Schienenfahrzeug an den sich verbreitenden Einsatz von elektrisch angetriebenen Straßenfahrzeugen anzupassen.

Hierzu wird vorgeschlagen, dass das Schienenfahrzeug zumindest eine Abstelleinrichtung, die zum Abstellen eines Straßenfahrzeugs während eines Transports vorgesehen ist, welches eine Antriebseinheit und eine Speichereinheit zum Speichern einer elektrischen Energie zur Versorgung der Antriebseinheit aufweist, und zumindest eine Ladeeinrichtung zum Beladen der Speichereinheit während des Transports aufweist. Es kann vorteilhaft eine Abstellzeit eines Straßenfahrzeugs während des Transports zum Aufladen der Speichereinheit genutzt werden, wodurch die Attraktivität der Beförderung per Bahn gesteigert und eine vorteilhafte Komplementarität zwischen der Beförderung per Bahn und der Nutzung von Elektrofahrzeugen erreicht werden können.

Unter einem "Straßenfahrzeug" soll insbesondere ein Landfahrzeug verstanden werden, welches vorrangig für den Betrieb auf Straßen vorgesehen ist, und für welches die Beibehaltung bzw. die Änderung der Fahrtrichtung auf der befahrenen Unterlage mit Hilfe der Haftreibung erfolgt.

In einer vorteilhaften Ausbildung der Erfindung ist die Abstelleinrichtung zum Abstellen eines elektrisch angetriebenen Leichtfahrzeugs vorgesehen.

Unter einem "Leichtfahrzeug" soll insbesondere ein Straßenfahrzeug verstanden werden, welches konstruktiv dazu geeignet ist, von einem Nutzer ohne Hilfsantrieb bzw. rein durch Muskelkraft bewegt bzw. manipuliert und daher manuell abgestellt zu werden. Aufgrund des Gewichts bzw. der Dimensionierung des Leichtfahrzeugs kann dieses vom Nutzer bei einem Einstieg und einem Ausstieg per Hand getragen werden. Ein Leichtfahrzeug kann insbesondere als Fahrrad, Mofa, Moped usw. ausgebildet sein.

Durch die vorgeschlagene Ausführung kann ein hoher Bedienkomfort für den Nutzer eines Leichtfahrzeugs, insbesondere eines elektrisch angetriebenen Fahrrads (auch "E-bike" genannt), erreicht werden. Insbesondere kann die erzielbare Reichweite des Straßenfahrzeugs durch dessen Aufladung im Schienenfahrzeug vorteilhaft gesteigert werden. Bei einem ausreichend langen Aufenthalt im Schienenfahrzeug kann ein Vollladungszustand der Speichereinheit beim Verlassen des Schienenfahrzeugs und für die Weiterfahrt mittels des Straßenfahrzeugs erreicht werden.

In diesem Zusammenhang wird vorgeschlagen, dass die Abstelleinrichtung in einem Fahrgastraum oder in einem mit einem Fahrgastraum zusammenhängenden Abteil angeordnet ist. Hierdurch kann ein hoher Komfort des Fahrgasts erreicht werden, welcher nach einem Abstellen von seinem Leichtfahrzeug mittels der Abstelleinrichtung schnell und einfach zu Sitzmöglichkeiten des Fahrtgastraums gelangen kann. Vorteilhaft können Sitzplätze in unmittelbarer Nähe von der Abstelleinrichtung für deren Nutzer vorreserviert werden oder es können, für Nutzer der Abstelleinrichtung, die sich im Voraus anmelden und eine Sitzplatzreservierung durchführen, vorzugsweise Sitzplätze vergeben werden, die sich in unmittelbarer Nähe von der Abstelleinrichtung befinden.

Außerdem wird vorgeschlagen, dass die Abstelleinrichtung eine Halteeinrichtung zum Halten des Straßenfahrzeugs aufweist, in welcher die Ladeeinrichtung integriert ist, wodurch eine konstruktiv einfache und kompakte Ausgestaltung erreicht werden kann. In dieser Ausführung kann eine für die Ladeeinrichtung vorgesehene Umhausung vorteilhaft als Trägereinrichtung für zumindest ein Halteelement der Halteeinrichtung dienen.

Gemäß einer alternativen Ausführung der Erfindung ist die Abstelleinrichtung zum Abstellen eines elektrisch angetriebenen Kraftfahrzeugs vorgesehen.

Unter einem "Kraftfahrzeug" soll insbesondere ein Fahrzeug verstanden werden, welches sich von einem Leichtfahrzeug unterscheidet und für welches aufgrund des Fahrzeugsgewichts bzw. der Fahrzeugsdimensionierung ein manuelles Abstellen nicht möglich ist. Zum Abstellen kann das Fahrzeug vorzugsweise durch dessen eigenen Antrieb bis in eine Abstellposition gefahren werden. Ein Kraftfahrzeug kann insbesondere als Pkw, Lkw oder Motorrad ausgebildet sein.

Das Schienenfahrzeug kann in dieser Ausführung der Erfindung vorzugsweise ausschließlich zur Aufnahme von Kraftfahrzeugen vorgesehen sein.

In dieser Ausführung der Erfindung kann die Reichweite von elektrisch angetriebenen Kraftfahrzeugen vorteilhaft durch eine Beförderung per Bahn und daher ohne konstruktive Maßnahme am Kraftfahrzeug gesteigert werden. Eine erweiterte Reichweite kann hiermit kostengünstig erfolgen, wodurch die Marktakzeptanz von elektrisch angetriebenen Kraftfahrzeugen vorteilhaft erhöht werden kann.

Eine hoher Bedienkomfort und eine vorteilhafte Flexibilität in der Nutzung der Abstell- und Ladeeinrichtung können des Weiteren erreicht werden, wenn das Schienenfahrzeug eine Bedieneinheit aufweist, die zur Einstellung zumindest eines Parameters für einen Ladevorgang vorgesehen ist. Die Bedieneinheit kann insbesondere zur Einstellung eines Ladestarts, Ladestopps, einer Ladezeit, einer Energiemenge usw. dienen.

Vorteilhafterweise ist das Schienenfahrzeug mit einer Anzeigeeinheit versehen, die zur Anzeige zumindest einer Ladevorgangskenngröße vorgesehen ist. Die Ladevorgangskenngröße kann insbesondere ein Ladezustand, eine Ladezeit, eine Energiemenge, eine Angabe über Ladekosten usw. sein.

Ferner wird vorgeschlagen, dass das Schienenfahrzeug eine Bedieneinrichtung aufweist, die zum Abwickeln eines Zahlungsvorgangs für einen Ladevorgang vorgesehen ist.

Es werden Ausführungsbeispiele der Erfindung anhand der Zeichnungen erläutert. Es zeigen:
- Figur 1:: eine Draufsicht eines Schienenfahrzeugs mit einem Fahrgastraum und einem Abteil, welches zum Abstellen von elektrisch angetriebenen Leichtfahrzeugen vorgesehen ist,
- Figur 2:: Ladevorrichtungen für das Abteil aus Figur 1 und
- Figur 3:: ein alternatives Schienenfahrzeug, welches zum Abstellen von elektrisch angetriebenen Kraftfahrzeugen vorgesehen ist.

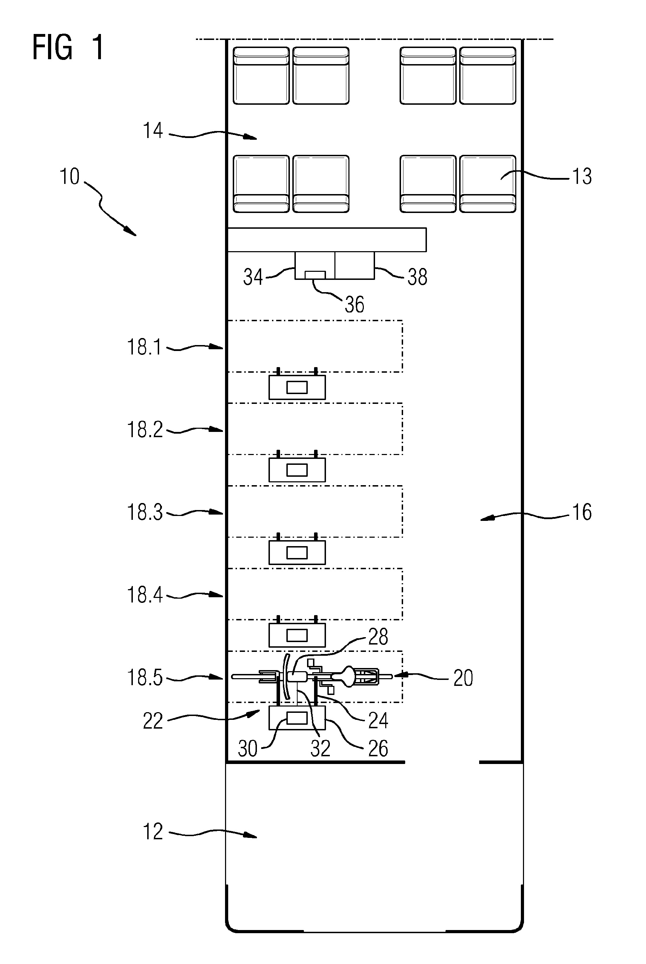

Figur 1 zeigt ein für den Transport von Passagieren ausgelegtes Schienenfahrzeug 10 in einer schematischen Draufsicht. Das Schienenfahrzeug 10 kann als Reisezugwagen oder als Triebzug ausgebildet sein.

Das Schienenfahrzeug 10 weist einen Einstiegsbereich 12 auf, über welchen Fahrgäste Zugang zu einem mit Sitzmöglichkeiten 13 ausgestatteten Fahrgastraum 14 haben. Zwischen dem Einstiegsbereich 12 und dem Fahrgastraum 14 ist ein Abteil 16 vorgesehen, in welchem als Leichtfahrzeug ausgebildete Straßenfahrzeuge 20, insbesondere Fahrräder, für die Fahrzeit abgestellt werden können. Das Abteil 16 befindet sich zwischen dem Einstiegsbereich 12 und dem Fahrgastraum 14 und hängt insbesondere mit diesem zusammen, d.h. die Bereiche des Schienenfahrzeugs 10, die das Abteil 16 und den Fahrgastraum 14 bilden, sind voneinander nicht vollständig abgetrennt.

Das Abteil 16 weist einen Satz von Abstelleinrichtungen 18.1 bis 18.5 auf, die jeweils zum Abstellen eines als Leichtfahrzeug ausgebildeten Straßenfahrzeugs 20 vorgesehen sind (in der Figur schematisch dargestellt). Zur Halterung des abgestellten Straßenfahrzeugs 20 sind die Abstelleinrichtungen 18.1 bis 18.5 jeweils mit einer Halteeinrichtung 22 ausgestattet. Die Halteeinrichtung 22 weist zumindest ein Halteelement 24 auf, das zur Halterung des Straßenfahrzeugs 20 dient und von einer Trageeinrichtung 26 getragen ist.

Das Abteil 16 ist insbesondere zum Abstellen von elektrisch angetriebenen Straßenfahrzeugen 20 ausgestattet. Diese sind mit einer elektrischen Antriebseinheit (nicht dargestellt) und einer Speichereinheit 28 versehen, die zur Versorgung der Antriebseinheit mit elektrischer Energie vorgesehen ist.

Jeder Abstelleinrichtung 18.1 bis 18.5 ist eine Ladeeinrichtung 30 zugeordnet, die zum Beladen der Speichereinheit 28 des abgestellten Straßenfahrzeugs 20 während dessen Abstellzeit dient. Hierzu weist die Ladeeinrichtung 30 ein Anschlussmittel 32 auf, welches zum Anschließen der Speichereinheit 28 mit einem Lademittel (nicht gezeigt) der Ladeeinrichtung 30 vorgesehen ist.

Die Ladeeinrichtungen 30 sind jeweils in der entsprechenden Halteeinrichtung 22, insbesondere in der Trageeinrichtung 26, der zugeordneten Abstelleinrichtung 18, integriert. Anders formuliert bildet eine Umhausung der Ladeeinrichtung 30 die Trageeinrichtung 26 für zumindest ein Halteelement 24 der Halteeinrichtung 22.

Das Abteil 16 ist ferner mit einer Bedieneinheit 34 versehen, durch welche ein Fahrgast zumindest einen Parameter für einen Ladevorgang einstellen kann. Beispielsweise kann der Fahrgast eine Information über die Aufenthaltsdauer im Schienenfahrzeug 10 eingeben. So kann er z.B. eine Ankunftszeit oder ein Ziel eingeben. Auf der Grundlage dieser Information kann ein Ladevorgang abhängig von der voraussichtlichen Abstellzeit und dem aktuellen Ladezustand der Speichereinheit 28 optimiert werden bzw. es kann eine Ladestrategie ermittelt werden.

Zur Bedienung der Bedieneinheit 34 weist diese eine Eingabeeinheit (nicht gezeigt) und eine Anzeigeeinheit 36 auf, wobei die Eingabeeinheit und die Anzeigeeinheit 36 vorteilhafterweise von einem Touch-Display gebildet sein können. Mittels der Anzeigeeinheit 36 können vom Fahrgast abgefragte Informationen über einen Ladevorgang angezeigt werden. So können Ladevorgangskenngrößen wie ein Ladezustand, eine Ladezeit, eine abgegebene Energiemenge usw. angezeigt werden. Zur Erfassung der Ladevorgangskenngrößen sind die Ladeeinrichtungen 30 jeweils mit nicht näher dargestellten Sensoreinheiten ausgestattet.

Zusätzlich zu den Abstelleinrichtungen 18, welchen jeweils eine Ladeeinrichtung 30 zugeordnet ist, können weitere Abstelleinrichtungen ohne Lademöglichkeit vorgesehen sein (nicht gezeigt). Diese können vorteilhaft zum Abstellen von Straßenfahrzeugen 20 dienen, für welche der Vollladezustand der Speichereinheit 28 erreicht ist.

Des Weiteren ist im Abteil 16 eine Bedieneinrichtung 38 vorgesehen, die zur Abwicklung eines Zahlungsvorgangs in Verbindung mit einem Ladevorgang dient. Durch die Bedieneinrichtung 38 kann ein Zahlungsvorgang mit Bargeld oder mit Karte erfolgen. Alternativ kann mittels der Bedieneinrichtung 38 eine Identifikation eines Fahrgasts erfolgen, dessen Zahlungsdaten bereits in einer Datenbank hinterlegt sind.

Im betrachteten Ausführungsbeispiel sind die Bedieneinheit 34 und die Bedieneinrichtung 38 als zentrale Einheiten für alle Abstelleinrichtungen 18.1 bis 18.5 ausgeführt. In einer alternativen Ausführung kann jede Abstelleinrichtung 18.1 bis 18.5 mit einer separaten Bedieneinheit 34 und/oder Bedieneinrichtung 36 versehen sein.

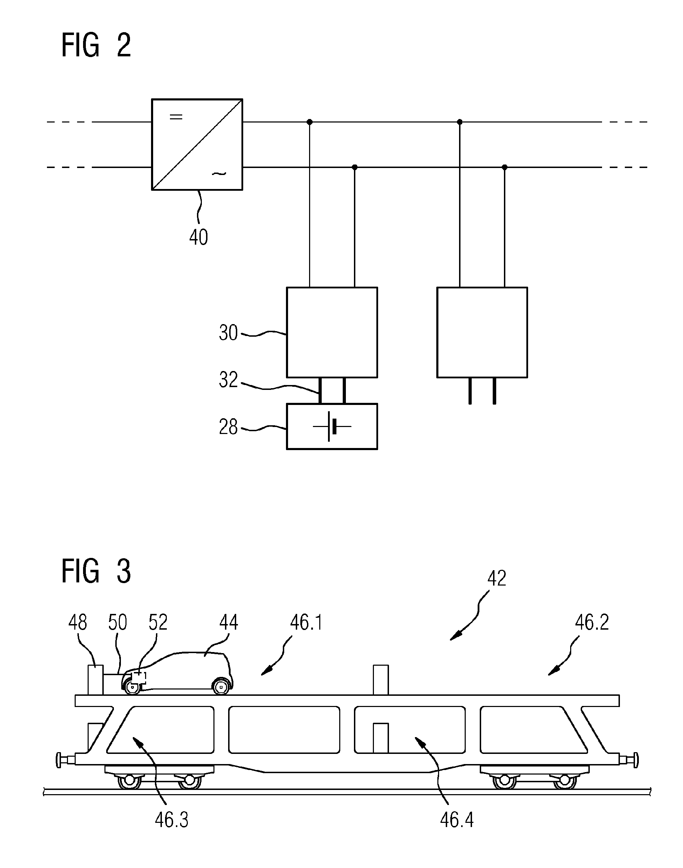

Die Ladeeinrichtungen 30 sind Bestandteile der Hilfsbetriebeausrüstung des Schienenfahrzeugs 10. Zur Versorgung der Ladeeinrichtungen 30 mit elektrischer Leistung ist das Schienenfahrzeug 10 mit einer Leistungsversorgungseinheit 40, insbesondere in der Form eines Hilfsbetriebeumrichters, versehen, wie in Figur 2 dargestellt.

Figur 3 zeigt eine alternative Ausführung eines Schienenfahrzeugs 42. Dieses ist als Eisenbahnwaggon ausgebildet, welcher zum Transport von als Kraftfahrzeuge ausgebildeten, elektrisch angetriebenen Straßenfahrzeugen 44 vorgesehen ist. Das Schienenfahrzeug 42 dient insbesondere zur Bildung eines Autoreisezuges, durch welchen große Entfernungen zurückgelegt werden.

Das Schienenfahrzeug 42 ist mit Abstelleinrichtungen 46.1 bis 46.4 auf mehreren Niveaus versehen, wobei die Abstelleinrichtungen 46.1 bis 46.4 jeweils einen Abstellplatz für ein Straßenfahrzeug 44 bilden. Jedem Abstellplatz ist eine Ladeeinrichtung 48 in der Form einer Ladesäule zugeordnet. Diese weist ein Anschlussmittel 50 auf, welches zum Anschließen des abgestellten Straßenfahrzeugs 44 bzw. zur Herstellung einer elektrischen Verbindung der Ladeeinrichtung 48 mit einer Speichereinheit 52 im Straßenfahrzeug 44 vorgesehen ist.

Die für den Ladevorgang notwendige elektrische Leistung wird von einer Leistungsversorgungseinheit bereitgestellt (nicht gezeigt), die in einer, den Autoreisezug bespannenden Lokomotive oder einem speziellen Versorgungswagen, angeordnet ist. Die elektrische Leistung eines Zuges wird mittels einer Zugsammelschiene verteilt, an welche die Schienenfahrzeuge 42 des Zuges angeschlossen sind.

## Patentansprüche

1. Schienenfahrzeug mit zumindest einer Abstelleinrichtung (18.1 - 18.5; 46.1 - 46.4), die zum Abstellen eines Straßenfahrzeugs (20; 44) während eines Transports vorgesehen ist, welches eine Antriebseinheit und eine Speichereinheit (28; 52) zum Speichern einer elektrischen Energie zur Versorgung der Antriebseinheit aufweist, und mit zumindest einer Ladeeinrichtung (30; 48) zum Beladen der Speichereinheit (28; 52) während des Transports.

2. Schienenfahrzeug nach Anspruch 1,
**dadurch gekennzeichnet, dass**
die Abstelleinrichtung (18.1 - 18.5) zum Abstellen eines elektrisch angetriebenen Leichtfahrzeugs vorgesehen ist.

3. Schienenfahrzeug nach Anspruch 2,
**dadurch gekennzeichnet, dass**
die Abstelleinrichtung (18.1 - 18.5) in einem Fahrgastraum oder in einem mit einem Fahrgastraum (14) zusammenhängenden Abteil (16) angeordnet ist.

4. Schienenfahrzeug nach Anspruch 2 oder 3,
**dadurch gekennzeichnet, dass**
die Abstelleinrichtung (18.1 - 18.5) eine Halteeinrichtung (22) zum Halten des Straßenfahrzeugs (20) aufweist, in welcher die Ladeeinrichtung (30) integriert ist.

5. Schienenfahrzeug nach Anspruch 1,
**dadurch gekennzeichnet, dass**
die Abstelleinrichtung (46.1 - 46.4) zum Abstellen eines elektrisch angetriebenen Kraftfahrzeugs vorgesehen ist.

6. Schienenfahrzeug nach einem der vorhergehenden Ansprüche,
**gekennzeichnet durch**,
eine Bedieneinheit (34), die zur Einstellung zumindest eines Parameters für einen Ladevorgang vorgesehen ist.

7. Schienenfahrzeug nach einem der vorhergehenden Ansprüche,
**gekennzeichnet durch**
eine Anzeigeeinheit (36), die zur Anzeige zumindest einer Ladevorgangskenngröße vorgesehen ist.

8. Schienenfahrzeug nach einem der vorhergehenden Ansprüche,
**gekennzeichnet durch**
eine Bedieneinrichtung (38), die zum Abwickeln eines Zahlungsvorgangs für einen Ladevorgang vorgesehen ist.
